# EUROPÄISCHE PATENTANMELDUNG

(11) **EP 3 702 082 A1**
(43) Veröffentlichungstag der Anmeldung: **02.09.2020**
(21) Anmeldenummer: 19000110.7
(22) Anmeldetag: 28.02.2019
(51) Int. Cl.: B23H 7/08, C23C 28/02

(54) **DRAHTELEKTRODE ZUM FUNKENEROSIVEN SCHNEIDEN EINES GEGENSTANDES**

(71) Anmelder: Berkenhoff GmbH, 35452 Heuchelheim (DE)
(72) Erfinder: Werner, Jens, D-89542 Herbrechtingen (DE); Nöthe, Tobias, Dr., 35745 Herborn (DE)
(74) Vertreter: Uexküll & Stolberg

(57) **Zusammenfassung**

Um eine Drahtelektrode (1) zum funkenerosiven Schneiden eines Gegenstandes mit einem Kern (2) und eine den Kern (2) umgebende Mantelschicht (3) bereitzustellen, die beim Schneiden den Gegenstand nicht mit Kupfer und/oder Zink kontaminiert, wird vorgeschlagen, dass die Mantelschicht (3) Zink und/oder Nickel und/oder wenigstens eine Verbindung aus der Gruppe NiCr, CuNiCr, Ni PdNi, Ti, TiN, TiC, TiCN, TiAIN, TiAICN, ZrN, ZrCN, TiZrN, CrC, CrN und CrCN enthält, wobei die Mantelschicht (3) eine ausreichende Dicke aufweist, so dass diese beim Schneiden des Gegenstandes nicht vollständig verbraucht wird.

## Beschreibung

Die Erfindung betrifft eine Drahtelektrode zum funkenerosiven Schneiden eines Gegenstandes mit einem Kern und eine den Kern umgebende Mantelschicht.

Eine Drahtelektrode zum funkenerosiven Schneiden ist aus dem Stand der Technik bekannt. Bei einem Schneidvorgang wird eine solche Drahtelektrode in einer Schneidvorrichtung gespannt gehalten und mit einer elektrischen Spannung beaufschlagt. Bei Annäherung eines auf Erdpotential liegenden elektrisch leitfähigen Gegenstandes findet eine Funkenentladung statt, mit deren Hilfe der Gegenstand geschnitten werden kann. Bei der Funkenentladung kommt es jedoch zum Verschleiß der Drahtelektrode. Um ein Zerreißen der unter Spannung gehaltenen Drahtelektrode zu vermeiden, wird diese während des Schneidprozesses fortwährend an dem zu schneidenden Gegenstand vorbeigezogen.

Gattungsgemäße Drahtelektroden müssen daher sowohl eine hohe Stromtragfähigkeit als auch eine ausreichende hohe Zugfestigkeit aufweisen, um den gestellten Anforderungen gerecht werden zu können. Um qualitativ hochwertige Schnitte zu ermöglichen, weisen Drahtelektroden im Vergleich zu sonstigen handelsüblichen Drähten einen geringen Durchmesser auf. Messing hat sich als geeigneter Werkstoff zur Herstellung von Drahtelektroden erwiesen. Um aus den als Halbzeug im Markt erhältlichen Ausgangsdrähten Drahtelektroden herzustellen, werden die Ausgangsdrähte in mehreren Arbeitsschritten gezogen und immer wieder weich geglüht, bis schließlich der geeignete Durchmesser erreicht ist. Es sind auf diese Weise hergestellte Drahtelektroden bekannt, die vollständig aus Messing bestehen, das in seiner α-Phase vorliegt.

Bei bestimmten Anforderungen hat es sich als vorteilhaft erwiesen, Drahtelektroden herzustellen, die einen Kern und einen den Kern umgebenden Mantel aufweisen. Der Kern besteht in der Regel aus einem Material mit hoher Leitfähigkeit und großer Zugfestigkeit, wobei der Mantel durch eine hohe Abriebfestigkeit gekennzeichnet ist. Dies ist vorteilhaft, weil an dem Mantel der eigentliche Erodierprozess stattfindet. Da der Kern im Wesentlichen allein die erforderliche Stromtragfestigkeit bereitstellt, können für den Mantel Materialen eingesetzt werden, die im Vergleich zum Kern weniger vorteilhafte Leitfähigkeitsgrade aufweisen, jedoch hinsichtlich des Erodierprozesses optimiert sind. Der Kern einer solchen Drahtelektrode besteht beispielsweise aus Kupfer oder α-Messing, das in seiner α-Phase vorliegt. Der Mantel kann eine oder mehrere Mantelschichten aufweisen, die beispielsweise aus reinem Zink und/oder aus Messing bestehen, das über einen im Vergleich zu α-Messing höheren Zinkanteil verfügt. Eine solche Drahtelektrode ist beispielsweise in der EP 1 295 664 B1 beschrieben.

Die bisher bekannten Drahtelektroden weisen den Nachteil auf, dass der zu bearbeitenden Gegenstand beim Schneiden mit Kupfer oder Zink verunreinigt wird. Eine solche Verunreinigung ist für manche Anwendungen jedoch nicht hinnehmbar.

Aufgabe der Erfindung ist es, eine Drahtelektrode der eingangs genannten Art bereitzustellen, mit der eine Verunreinigung oder Kontamination des zu schneidenden Gegenstandes vermieden werden kann.

Die Erfindung löst diese Aufgabe dadurch, dass die Mantelschicht Zink und/oder Nickel und/oder wenigstens eine Verbindung aus der Gruppe NiCr, CuNiCr, Ni PdNi, Ti, TiN, TiC, TiCN, TiAlN, TiAlCN, ZrN, ZrCN, TiZrN, CrC, CrN und CrCN enthält, wobei die Mantelschicht eine ausreichende Dicke aufweist, so dass diese beim Schneiden des Gegenstandes nicht vollständig verbraucht wird.

Erfindungsgemäß ist eine schützende Mantelschicht bereitgestellt, die im Wesentlichen also mit einem Anteil von über 90 Gew.-% Nickel und/oder Zink oder einer Verbindung aus der Gruppe enthält, die NiCr, CuNiCr, Ni PdNi, Ti, TiN, TiC, TiCN, TiAlN, TiAlCN, ZrN, ZrCN, TiZrN, CrC, CrN und CrCN umfasst. Eine im Wesentlichen aus Nickel oder Zink oder beiden Bestandteilen bestehende Mantelschicht hat sich als besonders wirksamer Schutz für den zu schneidenden Gegenstand gegenüber Verunreinigungen erwiesen. Darüber hinaus ist es möglich, die Mantelschicht im Wesentlichen durch wenigstens einen Stoff oder mit anderen Worten durch wenigstens eine Verbindung auszubilden, die aus einer Gruppe ausgewählt ist, die NiCr, CuNiCr, Ni PdNi, Ti, TiN, TiC, TiCN, TiAlN, TiAlCN, ZrN, ZrCN, TiZrN, CrC, CrN und CrCN umfasst. Diese Verbindungen haben sich neben Nickel und Zink als wirkungsvoll erwiesen, die Verschmutzung des zu schneidenden Gegenstandes ebenfalls zu vermeiden.

Gegenstände, die frei von Verunreinigungen mit Kupfer oder Zink sind, werden insbesondere in der Luft- und Raumfahrt benötigt, aber auch bei einem Einsatz der bearbeiteten Gegenstände in Turbinen oder dergleichen. Weitere Anwendungsgebiete kupfer- und zinkfreier Werkstücke sind die Analysetechnik und die Optik.

Die Mantelschicht umschließt im Rahmen der Erfindung den Kern vollumfänglich, so dass ein möglichst wirkungsvoller Schutz geschaffen ist. Bei einer bevorzugten Variante ist die Mantelschicht glatt ausgeführt. Risse in der Mantelschicht sind bei dieser Variante vermieden. Es ist im Rahmen der Erfindung jedoch auch möglich, dass die Mantelschicht Risse, Einkerbungen oder sonstige Ungleichmäßigkeiten aufweist.

Zur Herstellung der erfindungsgemäßen Drahtelektrode wird der Draht ggf. nach einer Diffusion zur Bildung einer Kernaußenschicht (z.B. aus beta-Messing) glatt gezogen und anschließend die Mantelschicht beispielsweise elektrolytisch aufgebracht, um anschließend auf den Enddurchmesser gezogen zu werden.

Vorteilhafterweise besteht die Mantelschicht ausschließlich aus Nickel. Gemäß einer ersten Variante der Erfindung besteht die schützende Mantelschicht ausschließlich aus Zink.

Hierbei hat es sich als vorteilhaft erwiesen, wenn die Drahtelektrode mit einem Gesamtdurchmesser zwischen 0,05 mm und 0,5 mm gefertigt ist, wobei die Mantelschicht eine Schichtdicke zwischen 1 µm und 10 µm aufweist. Bei diesen Angaben ist zu berücksichtigen, dass Drahtelektroden mit einem geringeren Gesamtdurchmesser, beispielsweise einem Gesamtdurchmesser von 0,05 mm, eine Mantelschicht mit einer Dicke von etwa 1 µm benötigen. Sie werden im Vergleich zu dickeren Drahtelektroden einer geringeren mechanischen Spannbelastung beim Schneiden ausgesetzt. Dies gilt entsprechend für die elektrische Beanspruchung, also die beim Schneiden eingesetzte elektrische Leistung, so dass der Abbrand der Mantelschicht entsprechend verringert und eine Mantelschichtdicke von nur einem Mikrometer ausreichend ist, um den gewünschten Schutz für das Werkstück, also den zu schneidenden Gegenstand bereitzustellen.

Bei einer hiervon abweichenden Variante besteht die Mantelschicht ausschließlich aus Zink und weist eine Dicke von 5 µm bis 40 µm und insbesondere 15 µm und 40 µm auf. Auch eine äußere, die Drahtelektrode abschirmende Schicht (Mantelschicht) aus Zink hat sich als wirksamer Schutz für den zu bearbeitenden Gegenstand herausgestellt. Sie stellt einen wirksamen Schutz vor Verunreinigungen mit Kupfer bereit, so dass die mit einer solchen Drahtelektrode geschnittenen Gegenstände beispielsweise als Implantate in der Medizintechnik eingesetzt werden können.

Bei einer Variante der Erfindung enthält der Kern Messing oder jedenfalls im Wesentlichen Messing. Im Wesentlichen Messing soll hier einem Messing-Anteil von über 95 Gew.-% entsprechen.

Gemäß einer bevorzugten Variante enthält der Kern ausschließlich Messing.

Weiterhin hat es sich als zweckmäßig erwiesen, wenn der Kern eine der Mantelschicht zugewandte Kernaußenschicht aus beta-Messing, gamma-Messing, eta-Messing und/oder Zink aufweist. Die Kernaußenschicht kann beispielsweise ausschließlich aus gamma-, beta- oder eta-Messing bestehen. Abweichend davon kann die Kernaußenschicht mehrere Schichten umfassen und beispielsweise eine innere Schicht aus beta-Messing aufweisen, die von einer gamma-Schicht umschlossen ist. Bei einer anderen Variante folgen eine beta-, gamma- und eta-Messingschichten innerhalb der Kernaußenschicht aufeinander. Auch eine die Kernaußenschicht zur Mantelschicht abschließende Zinkschicht kann Teil der Kernaußenschicht sein. Die Dicken der inneren Schichten der Kernaußenschicht liegen im Bereich von 1 bis 40 µm.

Gemäß einer weiteren Ausgestaltung der erfindungsgemäßen Drahtelektrode ist der Kern aus Kupfer oder aus Stahl mit einer Kernaußenschicht aus Kupfer gefertigt. Die Kernaußenschicht aus Kupfer wird beispielsweise auf den Stahlinnenkern platziert. Hierzu wird der Stahlinnenkern mit einem Kupferband vollumfänglich umhüllt. Dabei ist die Dicke der Kernaußenschicht aus Kupfer grundsätzlich beliebig. Der Strompfad einer solchen Drahtelektrode führt im Wesentlichen über die Kernaußenschicht. Der Stahlinnenkern stellt die notwendige Festigkeit der Drahtelektrode bereit. Der Leitwert eines Stahl-Kupfer-Kerns mit der Bezeichnung Staku 70 beträgt etwa 70 % bezogen auf einen reinen Kupferdraht.

Vorteilhafterweise enthält die Mantelschicht im Wesentlichen Titan (Ti).

Abweichend hiervon enthält die Mantelschicht im Wesentlichen Nickel, also Nickel zu einem Anteil von über 95 Gew.-%, wobei die Mantelschicht wenigstens einen Zusatzstoff aufweist. Vorteilhafterweise ist wenigstens einer der Zusatzstoffe aus der Gruppe ausgewählt, die NiCr, CuNiCr, Ni PdNi, Ti, TiN, TiC, TiCN, TiAlN, TiAlCN, ZrN, ZrCN, TiZrN, CrC, CrN und CrCN umfasst. Zusatzstoffe aus dieser Gruppe können die Wirkung der Nickelschicht, Verschmutzungen des zu schneidenden Gegenstandes zu vermeiden, erhöhen.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleich wirkende Elemente mit gleichen Bezugszeichen versehen sind und wobei
- Figur 1: ein erstes Ausführungsbeispiel der erfindungsgemäßen Drahtelektrode,
- Figur 2: ein weiteres Ausführungsbeispiel der erfindungsgemäßen Drahtelektrode und
- Figur 3: ein weiteres Ausführungsbeispiel der erfindungsgemäßen Drahtelektrode zeigen.

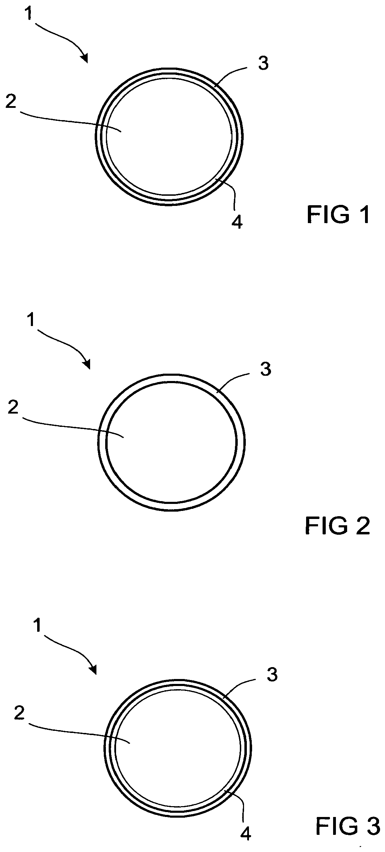

Figur 1 zeigt ein erstes Ausführungsbeispiel der erfindungsgemäßen Drahtelektrode 1 in einer geschnittenen Seitenansicht. Die Drahtelektrode weist einen Kern 2 und eine den Kern umgebende Mantelschicht 3 auf, die Nickel mit einem Anteil von 98 Gew.-% enthält. Mit anderen Worten besteht die Mantelschicht im Wesentlichen oder nahezu ausschließlich aus Nickel.

Der Gesamtdurchmesser der Drahtelektrode beträgt in dem gezeigten Beispiel 0.25 mm, wobei die Mantelschicht eine Dicke von 15 µm aufweist.

Um der Drahtelektrode 1 die notwendige mechanische Festigkeit zu verleihen, ist der Kern 2 mit einer Kernaußenschicht 4 aus beta-Messing ausgeführt. Der innere von der Kernaußenschicht 4 umschlossene Kernbereich besteht aus alpha-Messing.

Figur 2 zeigt ein weiteres Ausführungsbeispiel der erfindungsgemäßen Drahtelektrode 1. Dort besteht der Kern 2 ausschließlich aus beta-Messing, wobei die Mantelschicht 3 ausschließlich aus Zink besteht. Dabei ist der Gesamtdurchmesser der Drahtelektrode 0,2 mm, wobei die Mantelschicht 3 eine Dicke von 25 µm aufweist.

Figur 3 zeigt ein weiteres Ausführungsbeispiel der erfindungsgemäßen Drahtelektrode 1. Die dort gezeigte Drahtelektrode 1 verfügt ebenfalls über eine Mantelschicht aus Zink jedoch mit einer Dicke von 20 µm, wobei der Kern 2 einen inneren Abschnitt aus alpha-Messing aufweist. Der innere Abschnitt ist von einer Kernaußenschicht 4 umschlossen, die jedoch aus mehreren figürlich aus Gründen der Übersicht nicht dargestellten Unterschichten besteht. Die innerste Unterschicht der Kernaußenschicht 4 besteht aus beta-Messing. Die beta-Messing-Unterschicht ist von einer gamma-Messing-Unterschicht umgeben, die wiederum von einer eta-Messing-Unterschicht der Kernaußenschicht 4 umhüllt ist.

## Patentansprüche

1. Drahtelektrode (1) zum funkenerosiven Schneiden eines Gegenstandes mit einem Kern (2) und eine den Kern (2) umgebende Mantelschicht (3), **dadurch gekennzeichnet, dass** die Mantelschicht (3) Zink und/oder Nickel und/oder wenigstens eine Verbindung aus der Gruppe NiCr, CuNiCr, Ni PdNi, Ti, TiN, TiC, TiCN, TiAlN, TiAlCN, ZrN, ZrCN, TiZrN, CrC, CrN und CrCN enthält, wobei die Mantelschicht (3) eine ausreichende Dicke aufweist, so dass diese beim Schneiden des Gegenstandes nicht vollständig verbraucht wird.

2. Drahtelektrode (1) nach Anspruch 1, **dadurch gekennzeichnet, dass** die Mantelschicht (3) ausschließlich aus Nickel besteht.

3. Drahtelektrode (1) nach Anspruch 1, **dadurch gekennzeichnet, dass** die Mantelschicht neben Nickel und/oder Zink eine Verbindung aus der Gruppe NiCr, CuNiCr, Ni PdNi, Ti, TiN, TiC, TiCN, TiAlN, TiAlCN, ZrN, ZrCN, TiZrN, CrC, CrN und CrCN enthält.

4. Drahtelektrode (1) nach einem der vorhergehenden Ansprüche, **dadurch gekennzeichnet, dass** die Drahtelektrode (1) mit einem Gesamtdurchmesser zwischen 0,05 mm und 0,5 mm gefertigt ist, wobei die Mantelschicht (3) eine Schichtdicke zwischen 1 µm und 10 µm aufweist.

5. Drahtelektrode (1) nach Anspruch 1, **dadurch gekennzeichnet, dass** die Mantelschicht (3) ausschließlich aus Zink besteht und eine Dicke von 5 µm bis 40 µm und insbesondere 15 µm und 40 µm aufweist.

6. Drahtelektrode (1) nach einem der vorhergehenden Ansprüche, **dadurch gekennzeichnet, dass** der Kern (2) Messing enthält.

7. Drahtelektrode (1) nach Anspruch 4, **dadurch gekennzeichnet, dass** der Kern (2) ausschließlich Messing enthält.

8. Drahtelektrode (1) nach Anspruch 4 oder 5, **dadurch gekennzeichnet, dass** der Kern (2) eine der Mantelschicht (3) zugewandte Kernaußenschicht (4) aus beta-Messing, gamma-Messing, eta-Messing und/oder Zink aufweist.

9. Drahtelektrode (1) nach einem der Ansprüche 1 bis 4, **dadurch gekennzeichnet, dass** der Kern (2) aus Kupfer gefertigt ist.

10. Drahtelektrode (1) nach einem der Ansprüche 1 bis 4, **dadurch gekennzeichnet, dass** der Kern (2) oder aus Stahl mit einer Kernaußenschicht (4) aus Kupfer gefertigt ist.
